# EUROPEAN PATENT SPECIFICATION

(11) **EP 3 622 221 B1**
(45) Date of publication and mention of the grant of the patent: **14.10.2020**
(21) Application number: 18735368.5
(22) Date of filing: 23.05.2018
(51) Int. Cl.: F23G 5/027, F23G 5/08, F23G 5/16, F23G 5/46

(54) **MATERIALS TREATMENT APPARATUS AND METHOD OF TREATING MATERIAL**
VORRICHTUNG FÜR MATERIALBEHANDLUNG UND VERFAHREN ZUR MATERIALBEHANDLUNG
APPAREIL DE TRAITEMENT DE MATÉRIAUX ET PROCÉDÉ DE TRAITEMENT DE MATÉRIAUX

(30) Priority: 26.05.2017 GB 201708501
(43) Date of publication of application: 18.03.2020
(73) Proprietor: Manik Ventures Limited, Abbots Morton, Worcestershire WR7 4NA (GB)
(72) Inventor: SPENCER, Nik, Abbots Morton Worcestershire WR7 4NA (GB); JOUHARA, Hussam, Manchester Greater Manchester M14 7DT (GB)
(74) Representative: Downing, Michael Philip
(86) International application number: PCT/GB2018/051400
(87) International publication number: WO 2018/215767

(56) References cited:
- WO-A1-2009/047392
- JP-A- H0 849 821
- JP-A- 2005 326 042
- US-A1- 2016 326 440

## Description

### FIELD OF THE INVENTION

The present invention relates to a material treatment apparatus, and to a method of treating material.

### BACKGROUND ART

Our previous applications WO2015/104400 and WO2017/137716 proposed a new approach to the recycling of materials that might otherwise be disposed of, such as domestic and light commercial refuse. Instead of deploying large fleets of refuse collection vehicles to transport the refuse to central processing plants, we proposed small thermal treatment units that can be located in the premises concerned, to process the resources and release oils, syngas and heat that can be used to heat those premises or nearby premises.

JPH0849821A discloses a combustor 11, which burns a part of low-temperature distillation gas produced in a thermal decomposition reactor 2, employing a part of waste gas of combustion of another combustor 35 after driving a gas turbine 29 as combustion air. The waste gas of combustion is introduced directly into wastes in a thermal decomposition reactor 2 through a combustion waste gas supplying tube 16, and is used for a heat source for effecting the thermal decomposition of the waste. The combustion waste gas of the combustor 35 is employed for the combustion air of the other combustor 55. Accordingly, the combustion waste gas after driving the gas turbine 29 is changed into high-temperature combustion waste gas by the combustion of the final combustor 55 and is used as the heat source of production of steam for driving a steam power generator 50 as it is.

JP2005326042A describes a gasification furnace arranged to supply an oxygen-containing gas for combustion to burn a part of a gasified object by heating the gasified object by a heating burner 1 to produce a thermally decomposed gas by partially burning the gasified object. A combustion exhaust gas discharged from a combustion-type prime mover 2 in a state of including oxygen, is supplied as the oxygen-containing gas for combustion.

WO2009047392A1 discloses an apparatus for producing a pyrolysis product, comprising a pyrolysis reactor for forming pyrolysis product fractions from raw material by fast pyrolysis, a condensing device for condensing gaseous pyrolysis product fractions to mainly liquid pyrolysis product fractions, a combustion boiler arranged in conjunction with the pyrolysis reactor for forming energy fractions, and feeding devices for feeding raw materials to the pyrolysis reactor and the combustion boiler.

Our invention sets out this approach to recycling of resources, and gives examples of suitable apparatus for doing so based principally on a combination of pyrolysis and combustion. In this process, the resources are first pyrolysed to release syngas and oils which are collected and retained as fuel for a heating system. Air is then introduced into the chamber to allow combustion of the char, i.e. the remaining material, releasing heat which can be captured via a heat exchanger and deployed to heat the premises. This leaves a residue of non-combustible materials (mainly metallic) which can be recycled, and a sterile ash which can be flushed away.

### SUMMARY OF THE INVENTION

We have found that whilst this process recycles the resources very efficiently, the exhaust gases produced during the combustion stage are high in undesirable components such as carbon monoxide and volatile elements with a disagreeable odour. Carbon monoxide levels of around 300-400ppm have been observed, for example.

We therefore propose that the treatment unit, which as a minimum generally comprises a chamber for receiving the resource material, a heat source for heat-treating the material and/or for initiating combustion of the material, and a gas outlet from the chamber, should allow the gas that is exhausted via the outlet after combustion to be supplied to the burner of an associated boiler unit (either directly, or via the air inlet, or via the fuel inlet) the boiler being one that employs a burner for combusting fuel from the fuel inlet in air from the air inlet in order to heat a fluid. In this way, the unburnt elements of the gas expelled from the chamber are included in the combustion process of the boiler unit and fully combusted. This is distinct from the pyrolysis products resulting from heat-treatment of the material; as our previous application WO2015/104400 describes, these can be extracted from the chamber in order to be used as fuel to heat or otherwise supply the premises in which the unit is installed. Alternatively, albeit less preferably, they can be left in the chamber to be combusted along with the char.

This can be done under the control of an apparatus adapted to control the treatment unit by:
i. activating the heat source thereby to initiate heat-treatment of the material in the chamber,
ii. optionally, extracting pyrolysis products from the chamber,
iii. venting the chamber thereby to admit oxygen and initiate combustion of remaining material in the chamber, and
iv. allowing exhaust of combustion products via the gas outlet to the boiler unit.

The boiler can be a normal domestic boiler such as is commonly installed in order to provide a supply of hot water for sanitary purposes and for premises heating. The usual design aim of such a boiler unit is to avoid incomplete combustion, as the associated exhaust products, principally carbon monoxide, are potentially very dangerous. Therefore, it is counter-intuitive to use oxygen-depleted air exhausted from a combustion chamber in which to burn the fuel for a boiler. Such an approach would be expected to reduce the efficiency of the boiler and increase the emission of undesirable exhaust constituents. However, our tests have found CO emissions from the boiler to be less than 40ppm, which is below the legal limit of 150ppm and hence acceptable, especially if vented to the atmosphere. Domestic boilers usually heat an intermediate or transfer fluid, usually water with suitable additives for corrosion resistance, etc, and this is circulated around a closed circuit. The circuit may be a heating circuit which includes one or more radiators in which the heat is transferred into the room, or it may include a heat exchanger located within a hot water storage tank. Multiple such circuits may be supplied by the boiler, each being activated as and when needed. Other designs of boiler are known and may be used, including designs which heat a sanitary water supply directly without use of an intermediate fluid.

The gas outlet can feed gas to the inlet of the boiler unit via a heat exchanger, and/or a scrubber to remove entrained particulates. If both are employed, then ideally the heat exchanger is first in sequence.

The pyrolysis products of the resources being recycled (i.e. the output of the treatment unit after heat treatment but prior to combustion) are preferably supplied to the fuel inlet of the boiler unit. These pyrolysis products are combustible and can thus reduce the demand for fuel from the boiler. They are preferably supplied to the fuel inlet via a storage vessel that collects the pyrolysis products and thus acts as a buffer. Likewise, the exhaust gases may also be stored temporarily, to allow for different operating schedules of the treatment unit and the boiler. The fuel inlet of the boiler may also be supplied by a separate source of combustible fuel (such as natural gas), separate from the treatment unit.

The invention also provides a corresponding method of treating materials, comprising the steps of heat-treating the material to yield pyrolysis products; admitting oxygen thereby to combust remaining material; exhausting at least the gaseous combustion products to a boiler unit, optionally admixing the combustion products with air; in the boiler unit, combusting a fuel in the gaseous combustion products, to heat a transfer fluid.

Many dwellings and premises already have a boiler unit, so it may be convenient to employ such a unit in the manner described above, and hence provide a treatment apparatus with an exhaust suitable for attachment to a typical boiler unit (etc). This also allows the treatment apparatus to be used together with one of a range of boiler units chosen to suit the dwelling or premises in question. Alternatively, the treatment apparatus and the boiler unit could be a single integrated unit.

### BRIEF DESCRIPTION OF THE DRAWINGS

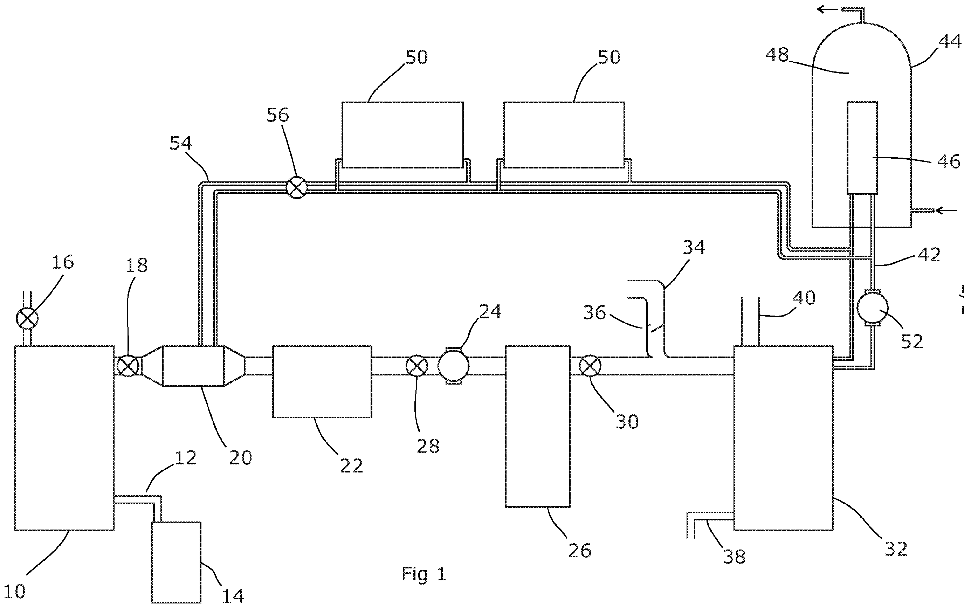

An embodiment of the present invention will now be described by way of example, with reference to the accompanying figures in which the sole figure 1 schematically illustrates an arrangement according to the present invention.

### DETAILED DESCRIPTION OF THE EMBODIMENTS

Figure 1 shows a schematic layout of the overall system. Resource materials for recycling are loaded into a treatment chamber 10 where they are anaerobically heated to around 300-400°C at which the material is pyrolised, yielding a range of products including mainly syngas and oils. Once pyrolysis is complete, these are removed via an outlet 12 and stored in a buffer 14. This leaves behind a residue which can be combusted by opening a valve 16 to allow a supply of air into the treatment chamber 10 while still at an elevated temperature. The hot exhaust gases from the combustion process can then be vented via an exhaust valve 18 to a heat exchanger 20 where the residual heat can be transferred to the transfer fluid of a conventional hot water system (explained more fully below). The cooled exhaust gases are then passed through a scrubber 22 to remove ash and other particulates; this is described and claimed in our copending application no. GB1706489.0 filed on 24 April 2017 to which the reader is referred for a fuller description.

The exhaust gases are then pumped by pump 24 into a temporary store 26, and held there by closing valves 28, 30 on either side. When the boiler 32 is next activated, valve 30 can be opened to allow the exhaust gases to leave the temporary store 26 and be mixed with the air inlet 34 to the boiler 32. A non-return valve 36 should be provided in the air inlet 34 to prevent gases from the temporary store 26 from escaping to the atmosphere. In alternative arrangements, the exhaust gases can be mixed with a gaseous fuel such as LPG or natural gas supplied to the boiler via its gas inlet pipe, or they can be introduced directly into the burner of the boiler via a separate injection means. However, admixing the exhaust gases with the air supply is particularly convenient.

Storage of the exhaust gases in the temporary store is useful in that the combi boiler does not then need to be running continuously for the entire period during which the treatment chamber 10 is operating or combusting. This is possible (in which case the temporary store 26 could be omitted) but would not be efficient. In practice, the exhaust from the treatment chamber 10 produces about 0.03 cubic metres per second; when run through a small compressor 24 and put in a 20 litre capacity tank at (for example) 4 bar this allows approximately 81 litres of storage or 5 minutes of operation of the treatment chamber 10. A typical combi boiler takes 0.25 cubic metres per second, so will require only 30 seconds of running to consume the output of the previous 5 minutes. The boiler is therefore operating at a mark/space ratio of 1:10, significantly more efficient.

During this time, the output of the boiler can be used for space heating or for hot water generation and so use is made of the heat. Of course, the capacity and pressure of the temporary store 26 could be varied so that the exhaust gases are retained until such time as there is a heating or hot water demand and then released in their entirety.

The boiler 32 is a conventional domestic boiler, in this example. It receives a supply of natural gas from a gas inlet pipe 38 and burns this in air supplied via the air inlet 34. Exhaust gases are vented to the atmosphere via a flue 40. The heat that is generated is transferred into a transfer fluid, usually water containing corrosion inhibitors and the like. This circulates around a heating system via pipework 42; as is conventional this system include (i) a hot water tank 44 within which a heat exchanger 46 fed with the transfer fluid by the pipework 42 transfers the heat into clean water 48 that can then be used for sanitary purposes, and (ii) a plurality of radiators 50 which are fed with the transfer fluid and radiate heat from the fluid into the rooms in which they are located. A circulation pump 52 urges the transfer fluid around the pipework when needed, and ensures that the fluid does not dwell in the boiler where it might overheat and cavitate. Valves are usually provided so as to direct transfer fluid to the hot water tank 44 or the radiators, or both, as required, together with a control system to control activation of the boiler, the pump and the various valves. These are commonplace in the art and are therefore not illustrated and need not be described in detail.

The exact details of the plumbing of the heating system are not essential to the present invention. For example, other types of heating system exist, for example systems in which the boiler is activated on demand in order to heat sanitary water directly, systems that deal with heating only, or hot water only, or which have more or fewer elements. The specific layout illustrated in figure 1 is by way of an example only and may be varied as necessary as is well known in the plumbing art.

Figure 1 also shows a link 54 from the pipework system 42 to the heat exchanger 20. A valve 56 between the link 54 and the pipework system 42 isolates the heat exchanger when necessary, and can be used to prevent heat generated by the boiler 32 (when active) from being dissipated in heating the heat exchanger 20. The valve 56 is opened when the exhaust gases from the treatment chamber 10 are being exhausted via the heat exchanger, to heat the transfer fluid. This can then be pumped around the pipework system 42 by the pump 52, either to heat the radiators 50 or to warm the water 48 in the hot water tank 44. Accordingly, efficient use is made of the heat employed to treat the material in the treatment chamber 10.

In an experimental arrangement in which exhaust gases from a treatment chamber 10 were fed (diluted) into the air inlet of a conventional domestic boiler, the change in the gas content was observed to be:

| Constituent | Chamber exhaust | Boiler Flue |
|---|---|---|
| O₂ (%) | 0.73 | 5.37 |
| CO (ppm) | 331 | 36.7 |
| NOx (ppm) | 50.4 | 14.1 |
| NO (ppm) | 48.0 | 13.4 |
| CO₂ (%) | 13.29 | 9.95 |

The exhaust gases were also observed to have lost a distinctive odour after passage through the boiler. Accordingly, the treatment of the exhaust gases in this manner converts an exhaust stream containing high pollutant levels into one that is considered safe to release into the atmosphere.

As mentioned above, syngas and oils are released from the material being processed during pyrolysis and are extracted and stored in vessel 14. These may be fed via a suitable pump and pipework (not shown) to the fuel inlet 38 of the boiler 32, further increasing the efficiency of the system by reducing the fuel demands of the system. The CO content of the gas provided to the boiler will also release some heat on combustion to CO₂, meaning that the overall system provides a safe and effective means for recycling resources, yielding a non-odorous output that is safe to vent, and incidentally reducing the fossil fuel demand of the boiler.

It will of course be understood that many variations may be made to the above-described embodiment without departing from the scope of the present invention as defined in the claims.

## Claims

1. Materials treatment apparatus comprising a treatment unit (10), a boiler unit (32) and a control apparatus for the treatment unit (10),
the treatment unit (10) comprising a chamber for receiving the material, a heat source for heat-treating the material; and a gas outlet (18) from the chamber; the boiler (32) unit comprising a fuel inlet (38) and an air inlet (34), each feeding a burner for combusting fuel from the fuel inlet (38) in air from the air inlet (34) in order to heat a fluid;
wherein the gas outlet (18) from the chamber feeds gas to the burner of the boiler unit
wherein the control apparatus is adapted to:
i. activate the heat source thereby to initiate heat-treatment of the material in the chamber,
ii. optionally, extract pyrolysis products from the chamber,
**characterised in that** the heat source is suitable and arranged for initiating combustion of the material, and the control apparatus is further adapted to:
iii. vent the chamber thereby to admit oxygen and initiate combustion of remaining material in the chamber, and
iv. allow exhaust of combustion products via the gas outlet to the boiler unit.

2. Materials treatment apparatus according to claim 1 in which the gas from the gas outlet of the chamber is blended with the fuel supply of the boiler unit and supplied via the fuel inlet.

3. Materials treatment apparatus according to claim 1 in which the gas from the gas outlet of the chamber is injected into the burner of the boiler separately from the air inlet and the fuel inlet (38).

4. Materials treatment apparatus according to claim 1 in which the gas from the gas outlet (18) of the chamber is blended with air supplied to the air intake (34) of the boiler.

5. Materials treatment apparatus according to any one of the preceding claims in which the gas outlet feeds gas to the boiler unit via a heat exchanger (20).

6. Materials treatment apparatus according to any one of the preceding claims in which the gas outlet (18) feeds gas to the boiler unit via a scrubber (22) to remove entrained particulates.

7. Materials treatment apparatus according to claim 6 as dependent on claim 5 in which the gas outlet (18) feeds gas to the air inlet of the boiler unit via the heat exchanger (20) first, followed by the scrubber.

8. Materials treatment apparatus according to any one of the preceding claims in which the gas outlet (18) leads to the boiler (32) via a storage vessel (26) for temporary storage of the chamber output.

9. Materials treatment apparatus according to any one of the preceding claims in which the fuel inlet (38) of the boiler is supplied by a source of combustible fuel separate from the treatment unit.

10. Materials treatment apparatus according to claim 9 in which the combustible fuel is natural gas.

11. Materials treatment apparatus according to any one of the preceding claims in which the fluid is a transfer fluid.

12. Materials treatment apparatus according to claim 11 in which the transfer fluid is water-based.

13. A method of treating material, comprising the steps of:
heat-treating the material to yield pyrolysis products;
optionally, extracting the pyrolysis products;
admitting oxygen thereby to combust the material;
exhausting at least the gaseous combustion products to a boiler unit (32), optionally admixing the combustion products with air;
in the boiler unit (32), combusting a fuel in combination with the gaseous combustion products, to heat a transfer fluid.

14. A method according to claim 13 in which the gaseous combustion products are fed to the boiler unit (32) via a heat exchanger (20).

15. A method according to claim 13 or claim 14 in which the gaseous combustion products are fed to the boiler unit (32) via a scrubber (22) to remove entrained particulates.

## Patentansprüche

1. Materialbehandlungsvorrichtung, umfassend eine Behandlungseinheit (10), eine Kesseleinheit (32) und eine Steuervorrichtung für die Behandlungseinheit (10),
wobei die Behandlungseinheit (10) eine Kammer zur Aufnahme des Materials, eine Heizquelle zur Wärmebehandlung des Materials; und einen Gasauslass (18) aus der Kammer umfasst; wobei die Kesseleinheit (32) einen Brennstoffeinlass (38) und einen Lufteinlass (34) umfasst, die jeweils einen Brenner zum Verbrennen von Brennstoff aus dem Brennstoffeinlass (38) in Luft vom Lufteinlass (34) speisen, um ein Fluid zu erwärmen;
wobei der Gasauslass (18) von der Kammer dem Brenner der Kesseleinheit Gas zuführt,
wobei die Steuervorrichtung dazu angepasst ist:
i. die Heizquelle zu aktivieren, um dadurch die Wärmebehandlung des Materials in der Kammer einzuleiten,
ii. fakultativ Pyrolyseprodukte aus der Kammer zu extrahieren,
**dadurch gekennzeichnet, dass** die Wärmequelle zur Einleitung der Verbrennung des Materials geeignet und angeordnet ist, und dass die Steuervorrichtung ferner dazu angepasst ist:
iii. die Kammer zu entlüften, um dadurch Sauerstoff einzulassen und die Verbrennung des in der Kammer verbleibenden Materials einzuleiten, und
iv. das Ablassen von Verbrennungsprodukten über den Gasauslass zur Kesseleinheit zu erlauben.

2. Materialbehandlungsvorrichtung nach Anspruch 1, wobei das Gas vom Gasauslass der Kammer mit der Brennstoffzufuhr der Kesseleinheit vermischt und über den Brennstoffeinlass zugeführt wird.

3. Materialbehandlungsvorrichtung nach Anspruch 1, wobei das Gas vom Gasauslass der Kammer in den Brenner des Kessels getrennt vom Lufteinlass und vom Brennstoffeinlass (38) eingespeist wird.

4. Materialbehandlungsvorrichtung nach Anspruch 1, wobei das Gas vom Gasauslass (18) der Kammer mit Luft vermischt wird, die der Luftansaugung (34) des Kessels zugeführt wird.

5. Materialbehandlungsvorrichtung nach einem der vorhergehenden Ansprüche, wobei der Gasauslass der Kesseleinheit Gas über einen Wärmetauscher (20) zuführt.

6. Materialbehandlungsvorrichtung nach einem der vorhergehenden Ansprüche, wobei der Gasauslass (18) der Kesseleinheit Gas über einen Wäscher (22) zuführt, um mitgerissene Schwebstoffe zu entfernen.

7. Materialbehandlungsvorrichtung nach Anspruch 6 in Abhängigkeit von Anspruch 5, wobei der Gasauslass (18) dem Lufteinlass der Kesseleinheit Gas zuerst über den Wärmetauscher (20) und dann über den Wäscher zuführt.

8. Materialbehandlungsvorrichtung nach einem der vorhergehenden Ansprüche, wobei der Gasauslass (18) über einen Lagerbehälter (26) zur temporären Lagerung der Kammerausgabe zum Kessel (32) führt.

9. Materialbehandlungsvorrichtung nach einem der vorhergehenden Ansprüche, wobei der Brennstoffeinlass (38) des Kessels von einer Quelle brennbaren Brennstoffs, getrennt von der Behandlungseinheit, gespeist wird.

10. Materialbehandlungsvorrichtung nach Anspruch 9, wobei der brennbare Brennstoff Erdgas ist.

11. Materialbehandlungsvorrichtung nach einem der vorhergehenden Ansprüche, wobei das Fluid ein Übertragungsfluid ist.

12. Materialbehandlungsvorrichtung nach Anspruch 11, wobei das Übertragungsfluid auf Wasser basiert.

13. Verfahren zur Behandlung von Material, umfassend die folgenden Schritte:
Wärmebehandlung des Materials, um Pyrolyseprodukte zu erhalten;
fakultativ Extraktion der Pyrolyseprodukte;
Einlassen von Sauerstoff, um dadurch das Material zu verbrennen;
Ablassen zumindest der gasförmigen Verbrennungsprodukte zu einer Kesseleinheit (32), fakultativ Vermischen der Verbrennungsprodukte mit Luft;
in der Kesseleinheit (32) Verbrennen eines Brennstoffs in Kombination mit den gasförmigen Verbrennungsprodukten zum Erwärmen eines Übertragungsfluids.

14. Verfahren nach Anspruch 13, wobei die gasförmigen Verbrennungsprodukte der Kesseleinheit (32) über einen Wärmetauscher (20) zugeführt werden.

15. Verfahren nach Anspruch 13 oder Anspruch 14, wobei die gasförmigen Verbrennungsprodukte der Kesseleinheit (32) über einen Wäscher (22) zugeführt werden, um mitgerissene Schwebstoffe zu entfernen.

## Revendications

1. Appareil de traitement de matériaux comprenant une unité de traitement (10), une unité de chaudière (32) et un appareil de contrôle pour l'unité de traitement (10),
l'unité de traitement (10) comprenant une chambre destinée à recevoir le matériau, une source de chaleur pour traiter thermiquement le matériau ; et une sortie de gaz (18) de la chambre ;
l'unité de chaudière (32) comprenant une entrée de combustible (38) et une entrée d'air (34), chacune alimentant un brûleur destiné à brûler du combustible issu de l'entrée de combustible (38) dans de l'air issu de l'entrée d'air (34) afin de chauffer un fluide ;
la sortie de gaz (18) de la chambre alimentant le brûleur de l'unité de chaudière en gaz,
l'appareil de contrôle étant adapté pour :
i. activer la source de chaleur ce qui permet d'initier un traitement thermique du matériau dans la chambre,
ii. éventuellement, extraire des produits de pyrolyse de la chambre,
**caractérisé en ce que** la source de chaleur est appropriée et agencée pour initier une combustion du matériau, et l'appareil de contrôle est en outre adapté pour :
iii. aérer la chambre ce qui permet d'admettre de l'oxygène et d'initier une combustion du matériau restant dans la chambre, et
iv. permettre un échappement de produits de combustion par le biais de la sortie de gaz vers l'unité de chaudière.

2. Appareil de traitement de matériaux selon la revendication 1 dans lequel le gaz issu de la sortie de gaz de la chambre est mélangé avec l'approvisionnement en combustible de l'unité de chaudière et approvisionné par le biais de l'entrée de combustible.

3. Appareil de traitement de matériaux selon la revendication 1 dans lequel le gaz issu de la sortie de gaz de la chambre est injecté dans le brûleur de la chaudière séparément de l'entrée d'air et de l'entrée de combustible (38).

4. Appareil de traitement de matériaux selon la revendication 1 dans lequel le gaz issu de la sortie de gaz (18) de la chambre est mélangé avec de l'air approvisionné dans la prise d'air (34) de la chaudière.

5. Appareil de traitement de matériaux selon l'une quelconque des revendications précédentes dans lequel la sortie de gaz alimente en gaz l'unité de chaudière par le biais d'un échangeur de chaleur (20).

6. Appareil de traitement de matériaux selon l'une quelconque des revendications précédentes dans lequel la sortie de gaz (18) alimente en gaz l'unité de chaudière par le biais d'un épurateur (22) pour éliminer des particules entraînées.

7. Appareil de traitement de matériaux selon la revendication 6 lorsqu'elle dépend de la revendication 5 dans lequel la sortie de gaz (18) alimente en gaz l'entrée d'air de l'unité de chaudière par le biais de l'échangeur de chaleur (20) tout d'abord, suivi par l'épurateur.

8. Appareil de traitement de matériaux selon l'une quelconque des revendications précédentes dans lequel la sortie de gaz (18) conduit à la chaudière (32) par le biais d'une cuve de stockage (26) pour un stockage temporaire de la sortie de la chambre.

9. Appareil de traitement de matériaux selon l'une quelconque des revendications précédentes dans lequel l'entrée de combustible (38) de la chaudière est approvisionnée par une source de combustible séparée de l'unité de traitement.

10. Appareil de traitement de matériaux selon la revendication 9 dans lequel le combustible est du gaz naturel.

11. Appareil de traitement de matériaux selon l'une quelconque des revendications précédentes dans lequel le fluide est un fluide de transfert.

12. Appareil de traitement de matériaux selon la revendication 11 dans lequel le fluide de transfert est à base d'eau.

13. Procédé de traitement de matériau, comprenant les étapes suivantes :
le traitement thermique du matériau pour obtenir des produits de pyrolyse ;
éventuellement, l'extraction des produits de pyrolyse ;
l'admission d'oxygène ce qui permet de brûler le matériau ;
l'échappement d'au moins les produits de combustion gazeux vers une unité de chaudière (32),
éventuellement le mélange des produits de combustion avec de l'air ;
dans l'unité de chaudière (32), la combustion d'un combustible conjointement avec les produits de combustion gazeux, afin de chauffer un fluide de transfert.

14. Procédé selon la revendication 13 dans lequel les produits de combustion gazeux sont introduits dans l'unité de chaudière (32) par le biais d'un échangeur de chaleur (20).

15. Procédé selon la revendication 13 ou la revendication 14 dans lequel les produits de combustion gazeux sont introduits dans l'unité de chaudière (32) par le biais d'un épurateur (22) afin d'éliminer des particules entraînées.
